# EUROPEAN PATENT APPLICATION

(11) **EP 3 570 453 A1**
(43) Date of publication of application: **20.11.2019**
(21) Application number: 18173289.2
(22) Date of filing: 18.05.2018
(51) Int. Cl.: H04B 7/0491, H04B 7/08, H04W 36/18

(54) **WIRELESS ACCESS NODE WITH IMPROVED BLOCKING EFFECT AVOIDANCE, AND CORRESPONDING METHOD**

(71) Applicant: Nokia Solutions and Networks Oy, 02610 Espoo (FI)
(72) Inventor: Timmers, Michael, 2018 Antwerpen (BE)
(74) Representative: IP HILLS NV

(57) **Abstract**

A wireless access node (100; 300) comprises:
- a plurality of receivers (101, 102, 103, 104; 301, 302, 303, 304) covering respective sectors, and configured to receive incoming data packets (110, 120, 130, 140; 310, 320, 330, 340) on a same radio frequency channel; and
- a controller (150; 350) configured to determine, upon detection of an incoming data packet by one or several receivers, which receiver is allowed to start correlating to a handshake sequence in the incoming data packet based on detected energy levels by the one or several receivers when detecting the incoming data packet.

## Description

### Technical Field

Various example embodiments relate to a wireless access node with multiple receivers that cover multiple, possibly overlapping sectors and that use a same frequency channel to receive data packets from transmitters present in one or more of the sectors.

### Background

A wireless access node such as a fixed wireless access point or a base station typically comprises multiple receivers that cover respective sectors. It is noticed that in the context of embodiments of the present invention a wireless access node generally represents any networking hardware device that allows wireless transmitters to connect to a wired network. A base station for instance represents an example wireless access node that allows a wireless telephone such as a cell phone to connect with a wired telephone network. A wireless access point or hotspot for instance represents another example wireless access node that allows a wireless transmitter communicating with the wireless access point over a wireless local area network (WLAN) like for instance a Wi-Fi network, to connect to wired network like for instance an Ethernet based wired local area network. A wireless access node may for example comprise four receivers that each cover a respective quadrant. The sectors covered by the different receivers may be overlapping. In a single channel wireless access node, all receivers use the same radio frequency channel to receive incoming data packets. The transmitters obviously also use the same radio frequency channel to transmit data packets to the wireless access node. The radio frequency channel is shared by the transmitters in a time divided manner: either fixed timeslots are assigned to the different transmitters in what are known as Time Division Multiple Access (TDMA) networks or alternatively the transmitters randomly selects the timeslots to transmit data packets in what are known as Carrier-Sense Multiple Access with Collision Avoidance (CSMA/CA) networks. In the latter CSMA/CA networks, arrivals of incoming packets are not scheduled. As a consequence thereof, each of the receivers is permanently listening for incoming data packets intended for it. An energy detector in the receiver triggers a correlator to start looking for a certain, predetermined handshake sequence contained in data packets. When the handshake sequence is recognized, the incoming packet is further processed by the received in order to establish if it is the intended receiver. In fact, this is also the case in TDMA networks where transmitters are not completely synchronized. One sector or receiver will be listening for a scheduled packet but due to timing offset, a packet for another sector/receiver, scheduled in the same timeslot, may arrive sooner.

### Summary

In case a receiver detects an incoming packet that is not intended for that receiver, for instance an interfering packet that is intended for another receiver covering a different sector but which is detected by a non-intended receiver because of overlap in the sectors or because of energy leakage into neighbouring receivers, the non-intended receiver locks on the incoming packet and starts correlating to the handshake sequence in such incoming packet, typically a low-energy packet as it is not intended for the receiver. After having correlated to the incoming data packet, the receiver starts processing the data packet. This may involve processing training sequences that are common to all links, like for instance processing the CE training sequences in WiFi based systems. A desired high-energy incoming packet that arrives during the training phase and that is intended for the receiver will be blocked from being detected by the receiver because the receiver is correlating to or processing the interfering low-energy packet. This problem, known as the blocking effect, limits the spatial re-use in wireless distribution systems.

To avoid the blocking effect, it has been proposed in standard specification IEEE 802.11ay to use selectable Golay sequences. The handshake sequence that is used in data packets in other words will be selected per link or per receiver. Golay sequences are orthogonal by nature. A receiver correlating to an incoming packet that is not intended for it, i.e. a data packet with different Golay sequence, shall treat this data packet as noise and consequently will not suffer from the blocking effect.

Selectable Golay sequences as described in IEEE 802.11ay are foreseen to be optional. As a consequence, not all compliant devices will have this capability. Moreover, this technology is not backwards compatible with existing wireless distribution systems: already existing transmitters, based on the IEEE 802.11ad standard specification, cannot be instructed to use a selected Golay sequence, as a result of which the blocking effect will continue to exist. Every transmitter in a sector will need to have the capability to select its Golay sequence. If a single non-complying transmitter is present in a sector, the entire sector will need to revert back to the default Golay sequence.

It is an object of embodiments of the invention to disclose a wireless access node and corresponding method for reducing blocking effect that does not require selectable Golay or handshake sequences, that does not depend on compliancy with certain standards, and that is therefore backwards compatible with existing transmitters.

Embodiments of the invention disclose a wireless access node as defined by claim 1, comprising:
- a plurality of receivers covering respective sectors, the plurality of receivers being configured to receive incoming data packets on a same radio frequency channel; and
- a controller coupled to the plurality of receivers and configured to determine, upon detection of an incoming data packet by one or several receivers out of the plurality of receivers, which receiver is allowed to start correlating to a handshake sequence in the incoming data packet based on detected energy levels by the one or several receivers when detecting the incoming data packet.

Thus, embodiments of the invention rely on staged receivers. Amongst all receivers that detect an incoming data packet, only one receiver is selected and allowed to start correlating to the handshake sequence in the incoming data packet. All other receivers are prevented from correlating to the handshake packet and consequently cannot get affected by the blocking effect resulting from correlating to or processing a data packet that is not intended for those receivers. The receivers that simultaneously detect an incoming packet in other words are staged and one of them is given priority to start correlating to the incoming data packet. The selection of the receiver that is allowed to start correlating to the handshake sequence in the incoming data packet is based on detected energy levels because the detected energy levels are a good indication of the receiver or sector where the packet is intended for. In an example embodiment, the receiver that received the highest energy level in the listening phase will for instance be allowed to start correlating. All other receivers will then be prevented from locking onto the low-energy incoming packet they detected. In another example embodiment described in more detail below, an energy threshold may be installed in each receiver in view of expected energy levels that will be received from scheduled transmitters. More complex strategies can be implemented in further embodiments. In a TDMA system for instance, an idle receiver with a scheduled reception can start correlating after a short time interval to avoid that certain transmitters are discarded from being received in situations where two packets are sent simultaneously. In yet another alternative embodiment, multiple thresholds may be installed: such receiver may never correlate as long as the detected energy level stays below a first threshold, may correlate only if it is the highest-energy sector whenever the detected energy level is above the first threshold but stays below a second threshold, and may always correlate when the detected energy level is above the second threshold.

Staged receivers as described here above in relation to embodiments of the invention can be implemented without requiring any adaptation to existing transmitters. In other words, staged receivers as solution to reduce the blocking effect in wireless distribution systems is backwards compatible with existing transmitters. There is no need to negotiate or select a different handshake sequence per link. Embodiments of the invention in other words support single Golay sequence handshaking in wireless distribution systems that use the same frequency channel across multiple sectors or receivers.

It is noticed that the process to decide which receiver is allowed to start correlating to an incoming packet based on detected energy levels can be executed within an exceptionally short time interval, hence introducing no disturbing delay. This is especially the case where the receivers of the different sectors are implemented on a single die. Furthermore, the process to decide which receiver is allowed to start correlating to an incoming packet consumes substantially less power than the correlation process itself. The energy detection phase inherent to embodiments of the invention consequently reduces the power consumption in wireless distribution systems without noticeably delaying packet delivery.

In sample embodiments of the wireless access node defined by claim 2:
- each receiver comprises an energy detector configured to listen to the radio frequency channel, to determine an energy level of the incoming data packet as perceived by the receiver, and to report the energy level to the controller; and
- the controller is further configured to allow the receiver with highest detected energy level to start correlating to the handshake sequence in the incoming data packet, and to disallow all other receivers to start correlating to the handshake sequence in the incoming data packet.

Indeed, one possible implementation of the energy detection relies on the presence of an energy detector in each receiver. The energy detector permanently listens to the frequency channel and reports the energy level detected to the controller as soon as this energy level exceeds a certain predetermined noise threshold. Amongst all receivers that nearly simultaneously report the detected energy level, the controller then selects the receiver with highest detected energy level and instructs that receiver to start correlating to the handshake sequence in the incoming data packet. The other receivers are instructed by the controller to refrain from correlating to the handshake sequence, or they are pre-configured to refrain from correlating to the handshake sequence in absence of any instructions from the controller. Only the receiver or sector with highest detected energy level, i.e. the receiver or sector where the packet is most likely intended for, will start correlating. Should this receiver detect upon processing the incoming data packet that is not the intended receiver, it may report this fact to the controller which thereupon will instruct the second staged receiver, i.e. the receiver with the one but highest detected energy level, to start correlating to the handshake sequence, and so on.

In embodiments of the wireless access node defined by claim 3:
- each receiver of the plurality of receivers comprises an energy level estimator configured to determine an estimated incoming energy level for an incoming data packet from an associated transmitter, and to report the estimated incoming energy level to the controller;
- the controller is configured to determine an energy threshold from the estimated incoming energy level, and to report the energy threshold to the receiver; and
- the receiver is further configured to temporarily apply the energy threshold such that the receiver starts corelating to the handshake sequence in an incoming data packet only if the incoming data packet is detected by the receiver with an energy level above the energy threshold.

Thus, an alternative implementation of the energy detection relies on the presence of energy level estimators in each of the receivers. During association of a transmitter with a receiver, the energy level estimator in the latter receiver shall estimate the energy level whereat data packets originating from that transmitter are expected to be received. This estimated energy level is reported to the controller to enable the controller to set an energy threshold for that receiver, the energy threshold being a minimum level of energy that must be sensed by the receiver in the listening phase in order to allow the receiver to enter the correlating phase wherein its correlator starts correlating to the handshake sequence in the incoming data packet. The energy threshold determined by the controller shall be used temporarily by the receiver, for instance for a predetermined time interval wherein it is expected that a data packet will be received from an associated transmitter. When another transmitter associates itself with the receiver, a new energy threshold will be determined by the controller for that receiver, based on the newly estimated energy level. This way, each of the receivers is applying an individual energy threshold that is regularly updated by the controller, and each receiver shall only be allowed to start correlating to the handshake sequence when the detected energy level exceeds its individual energy threshold applicable at that time. In case of leakage into other sectors where the data packet is not intended for, the receivers in such sectors will be prevented from starting to correlate to such low-energy data packet not intended for them through the energy threshold set at these receivers. As a result, the blocking effect on such receivers shall again be reduced without impacting the transmitters, i.e. in a backwards compatible manner, and without requiring the introduction of multiple handshake sequences. The benefit of this implementation lies in the fact that the latency requirement between the receiver and the controller can be increased. The controller will probably also want to know the success of the packet reception: the receiver for instance may report to the correlator that it started correlating to a packet with energy X but discovered it was not the intended receiver, or the receiver may report to the correlator that it started correlating to a packet with estimated energy level Y but was unable to successfully read the packet header, etc.

In embodiments of the wireless access node defined by claim 4, the handshake sequence in the incoming data packet is receiver independent.

Indeed, embodiments of the wireless access node may take advantage of the fact that no different handshake sequences like for instance a different Golay sequence per link, per receiver or per sector, must be used in order to avoid the blocking effect. The staged receivers controlled on the basis of detected energy levels mitigate blocking effects also if a single handshake sequence is used, for instance a single Golay sequence, across all receivers. This ensures backwards compatibility with existing transmitters that are for instance compliant with standard specification IEEE 802.11ad, and it ensures compatibility with transmitters that are compliant with new standard specifications like IEEE 802.11ay without supporting the optional feature of selectable Golay sequences therein.

In sample embodiments defined by claim 5, the wireless access node is a 3GPP base station.

Indeed, one sample application wherein embodiments of the present invention are useful to mitigate blocking effects is base stations in 3rd Generation Partnership Project networks or 3GPP networks.

In sample embodiments defined by claim 6, the wireless access node is a fixed wireless access point.

Hence another sample application wherein embodiments of the present invention are useful to mitigate blocking effects are fixed wireless access points like for instance access points in wireless passive optical networks or wireless PONs.

In addition to a wireless access node as defined by claim 1, embodiments of the invention also concern a corresponding method for improving blocking effect avoidance in a wireless access node, as defined by claim 7, the method comprising the steps of:
- detecting an incoming data packet by one or several receivers out of a plurality of receivers covering respective sectors and operating on a same radio frequency channel; and
- determining which receiver is allowed to start correlating to a handshake sequence in the incoming data packet based on detected energy levels by the one or several receivers when detecting the incoming data packet.

Embodiments of the invention further also concern a computer program product as defined by claim 8, comprising instructions for causing a wireless access node to perform at least the following:
- detecting an incoming data packet by one or several receivers out of a plurality of receivers covering respective sectors and operating on a same radio frequency channel; and
- determining which receiver is allowed to start correlating to a handshake sequence in the incoming data packet based on detected energy levels by the one or several receivers when detecting the incoming data packet.

### Brief Description of the Drawings

Some example embodiments will now be described with reference to the accompanying drawings.
Fig. 1 shows a functional block scheme of a first example embodiment 100 of the wireless access node according to the invention;
Fig. 2 shows a flow diagram of an example embodiment of the method for improving blocking effect avoidance according to the invention, as applied in wireless access node 100;
Fig. 3 shows a functional block scheme of a second example embodiment 300 of the wireless access node according to the invention;
Fig. 4 shows a flow diagram of an example embodiment of the method for improving blocking effect avoidance according to the invention, as applied in wireless access node 300; and
Fig. 5 illustrates a suitable computing system 500 for realizing methods and devices according to embodiments of the invention.

### Detailed Description of Embodiment(s)

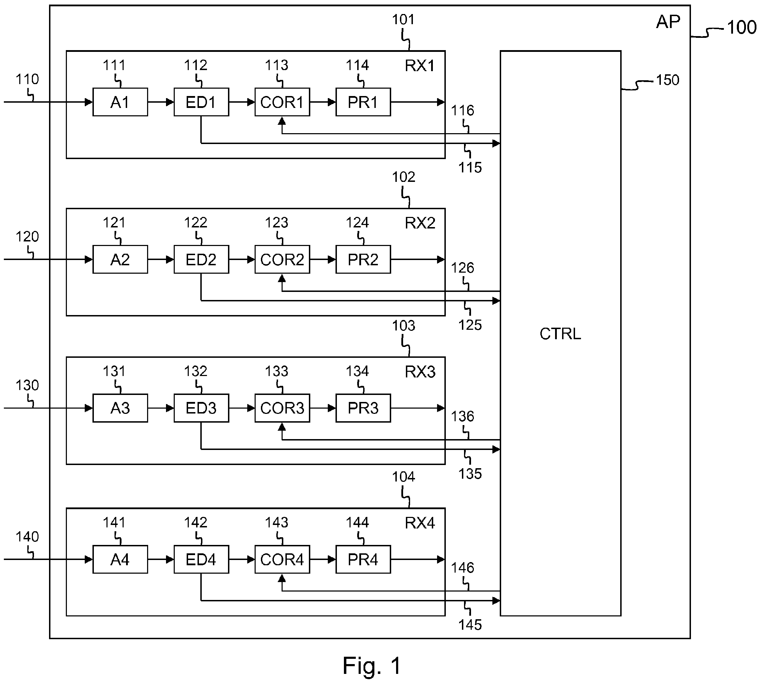

Fig. 1 shows a wireless access point AP or 100 that comprises four receivers respectively named RX1 or 101, RX2 or 102, RX3 or 103 and RX4 or 104, and a controller CTRL or 150. The first receiver 101 comprises a first antenna A1 or 111, a first energy detector ED1 or 112, a first correlator COR1 or 113 and a first packet processor PR1 or 114 that are serial coupled to each other. The first antenna 111 covers a first sector and receives data packets 110 from transmitters that have associated to the first receiver 101 based on an analysis that showed it will provide them with the best performance. The first correlator 113 and first packet processor 114 jointly constitute a digital signal processing unit or DSP unit that may be implemented through a single integrated circuit or through a set of integrated circuits. In sample embodiments, the first energy detector 112 may as well form part of this DSP unit. The first energy detector 112 has a signalling output coupled to the controller 150. The first correlator 113 has a signalling input coupled to the controller 150. Similarly, the second receiver 102 comprises a second antenna A2 or 121, a second energy detector ED2 or 122, a second correlator COR2 or 123 and a second packet processor PR2 or 124 that are serial coupled to each other. The second antenna 121 covers a second sector and receives data packets 120 from transmitters that have associated to the second receiver 102 based on an analysis that showed it will provide them with the best performance. The second correlator 123 and second packet processor 124 jointly constitute a digital signal processing unit or DSP unit that may be implemented through a single integrated circuit or through a set of integrated circuits. In sample embodiments, the second energy detector 122 may as well form part of this DSP unit. The second energy detector 122 has a signalling output coupled to the controller 150. The second correlator 123 has a signalling input coupled to the controller 150. Similarly, the third receiver 103 comprises a third antenna A3 or 131, a third energy detector ED3 or 132, a third correlator COR3 or 133 and a third packet processor PR3 or 134 that are serial coupled to each other. The third antenna 131 covers a third sector and receives data packets 130 from transmitters that have associated to the third receiver 103 based on an analysis that showed it will provide them with the best performance. The third correlator 133 and third packet processor 134 jointly constitute a digital signal processing unit or DSP unit that may be implemented through a single integrated circuit or through a set of integrated circuits. In sample embodiments, the third energy detector 132 may as well form part of this DSP unit. The third energy detector 132 has a signalling output coupled to the controller 150. The third correlator 133 has a signalling input coupled to the controller 150. Further similarly, the fourth receiver 104 comprises a fourth antenna A4 or 141, a fourth energy detector ED4 or 142, a fourth correlator COR4 or 143 and a fourth packet processor PR4 or 144 that are serial coupled to each other. The fourth antenna 141 covers a fourth sector and receives data packets 140 from transmitters that have associated to the fourth receiver 104 based on an analysis that showed it will provide them with the best performance. The fourth correlator 143 and fourth packet processor 144 jointly constitute a digital signal processing unit or DSP unit that may be implemented through a single integrated circuit or through a set of integrated circuits. In sample embodiments, the fourth energy detector 142 may as well form part of this DSP unit. The fourth energy detector 142 has a signalling output coupled to the controller 150. The fourth correlator 143 has a signalling input coupled to the controller 150.

The first, second, third and fourth antennas 111, 121, 131 and 141 are configured to listen to the same radio frequency channel, i.e. a single radio frequency channel whereon data packets are transmitted by one or plural transmitters in each of the sectors. It is further noticed that the first, second, third and fourth sectors may be overlapping. As a consequence thereof a data packet transmitted by a transmitter on the single radio frequency channel may be detected by one or several of the receivers 101-104.

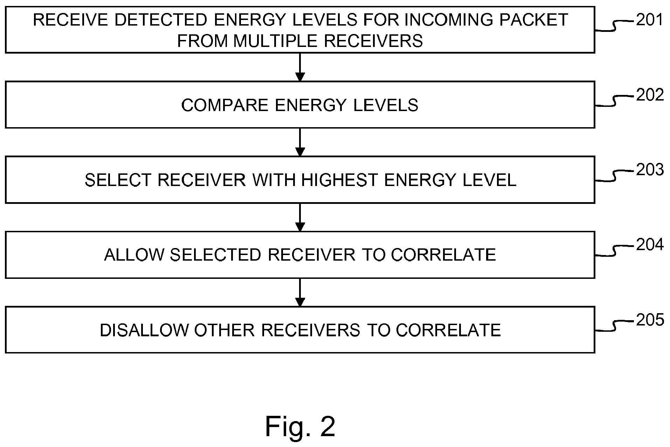

If an incoming data packet is for example received by the four antennas 111, 121, 131 and 141, the energy detectors 112, 122, 132 and 142 shall detect this incoming data packet nearly simultaneously and determine the energy level sensed for this incoming data packet. The respective energy levels 115, 125, 135 and 145 are reported by the energy detectors 112, 122, 132 and 142 to the controller 150. The controller 150, receiving the energy levels for the incoming data packet from the respective receivers 101-104 in a first step 201 thereupon executes the algorithm illustrated by Fig. 2. In a second step 202, the controller compares the energy levels 115, 125, 135 and 145 received from the receivers 101-104, and determines in a third step 203 the receiver with highest energy level sensed for the incoming data packet. In a fourth step 204, the controller 150 generates control signals allowing the correlator in the receiver that sensed the highest energy level to start correlating to the handshake sequence, e.g. the Golay sequence, that is assumed to be present in the incoming data packet. In a fifth step 205, the controller 150 generates control signals disallowing all other receivers to start correlating to the handshake sequence. If it is assumed for instance in Fig. 2 that the energy level 125 sensed by the second energy detector 122 is higher than the energy levels 115, 135 and 145 sensed by the energy detectors 112, 132 and 142, the controller 150 shall generate a control signal 126 in step 204 to instruct the second correlator 123 to start correlating to the handshake sequence. In step 205, the controller 150 generates control signals 116, 136 and 146 respectively instructing the first correlator 113, third correlator 133 and fourth correlator 143 to refrain from correlating to the handshake sequence. As a result thereof, these correlators 113, 133 and 143 and/or the packet processors 114, 134 and 144 in the first receiver 101, third receiver 103 and fourth receiver 104 do not get blocked on an incoming data packet that is presumably not intended for these receivers given the lower energy levels at which the incoming data packet was detected by these receivers. Staging the receivers that simultaneously detect the presence of an incoming data packet according to the energy levels detected by these receivers hence avoids that multiple receivers start training to a single incoming data packet and get blocked temporarily which would dramatically reduce the spatial re-use of the wireless access point 100.

It is noticed that the delay introduced by staging the receivers 101-104 through execution of the algorithm illustrated by Fig. 2 is exceptionally short. This is in particular so when the energy detectors 112, 122, 132, 142 and controller 150 are implemented in a single package, i.e. a single integrated chip or single integrated chipset.

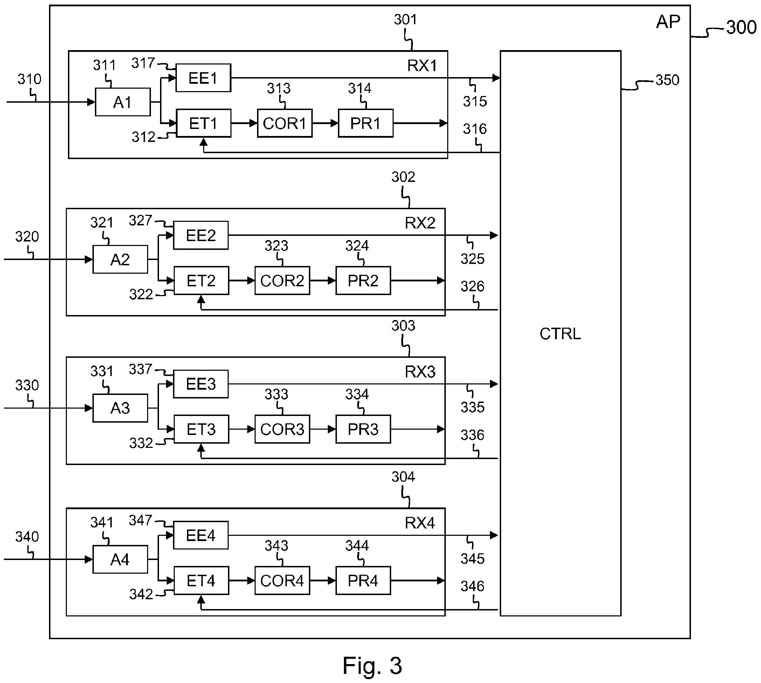

Fig. 3 shows a wireless access point AP or 300 that comprises four receivers respectively named RX1 or 301, RX2 or 302, RX3 or 303 and RX4 or 304, and a controller CTRL or 350. The first receiver 301 comprises a first antenna A1 or 311, and a first energy level estimator EE1 or 317, coupled to the first antenna 311. The first receiver 301 further comprises a first energy threshold unit ET1 or 312, a first correlator COR1 or 313 and a first packet processor PR1 or 314 that are serial coupled to the first antenna 311. The first antenna 311 covers a first sector and receives data packets 310 from transmitters that have associated to the first receiver 301 based on an analysis that showed it will provide them with the best performance. The first correlator 313 and first packet processor 314 jointly constitute a digital signal processing unit or DSP unit that may be implemented through a single integrated circuit or through a set of integrated circuits. In sample embodiments, the first energy level estimator 317 and first energy threshold unit 312 may as well form part of this DSP unit. The first energy level estimator 317 has a signalling output coupled to the controller 150. The first energy threshold unit 312 has a signalling input coupled to the controller 150. Similarly, the second receiver 302 comprises a second antenna A2 or 321, and a second energy level estimator EE2 or 327, coupled to the second antenna 321. The second receiver 302 further comprises a second energy threshold unit ET2 or 322, a second correlator COR2 or 323 and a second packet processor PR2 or 324 that are serial coupled to the second antenna 321. The second antenna 321 covers a second sector and receives data packets 320 from transmitters that have associated to the second receiver 302 based on an analysis that showed it will provide them with the best performance. The second correlator 323 and second packet processor 324 jointly constitute a digital signal processing unit or DSP unit that may be implemented through a single integrated circuit or through a set of integrated circuits. In sample embodiments, the second energy level estimator 327 and second energy threshold unit 322 may as well form part of this DSP unit. The second energy level estimator 327 has a signalling output coupled to the controller 150. The second energy threshold unit 322 has a signalling input coupled to the controller 150. Similarly, the third receiver 303 comprises a third antenna A3 or 331, and a third energy level estimator EE3 or 337, coupled to the third antenna 331. The third receiver 303 further comprises a third energy threshold unit ET3 or 332, a third correlator COR3 or 333 and a third packet processor PR3 or 334 that are serial coupled to the third antenna 331. The third antenna 331 covers a third sector and receives data packets 330 from transmitters that have associated to the third receiver 303 based on an analysis that showed it will provide them with the best performance. The third correlator 333 and third packet processor 334 jointly constitute a digital signal processing unit or DSP unit that may be implemented through a single integrated circuit or through a set of integrated circuits. In sample embodiments, the third energy level estimator 337 and third energy threshold unit 332 may as well form part of this DSP unit. The third energy level estimator 337 has a signalling output coupled to the controller 150. The third energy threshold unit 332 has a signalling input coupled to the controller 150. Further similarly, the fourth receiver 304 comprises a fourth antenna A4 or 341, and a fourth energy level estimator EE4 or 347, coupled to the fourth antenna 341. The fourth receiver 304 further comprises a fourth energy threshold unit ET4 or 342, a fourth correlator COR4 or 343 and a fourth packet processor PR4 or 344 that are serial coupled to the fourth antenna 341. The fourth antenna 341 covers a fourth sector and receives data packets 340 from transmitters that have associated to the fourth receiver 304 based on an analysis that showed it will provide them with the best performance. The fourth correlator 343 and fourth packet processor 344 jointly constitute a digital signal processing unit or DSP unit that may be implemented through a single integrated circuit or through a set of integrated circuits. In sample embodiments, the fourth energy level estimator 347 and fourth energy threshold unit 342 may as well form part of this DSP unit. The fourth energy level estimator 347 has a signalling output coupled to the controller 150. The fourth energy threshold unit 342 has a signalling input coupled to the controller 150.

The first, second, third and fourth antennas 311, 321, 331 and 341 are configured to listen to the same radio frequency channel, i.e. a single radio frequency channel whereon data packets are transmitted by one or plural transmitters in each of the sectors. It is further noticed that the first, second, third and fourth sectors may be overlapping. As a consequence thereof, a data packet transmitted by a transmitter on the single radio frequency channel may be detected by one or several of the receivers 301-304.

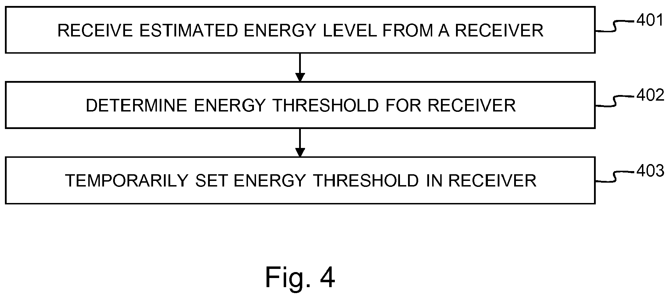

When a transmitter is associating with a receiver, for instance with the first receiver 301, the first energy level estimator 317 shall estimate the energy level whereat an incoming data packet sent by that transmitter will be received by the first receiver 301. This estimated energy level 315 is reported to the controller 350. In a similar way, the energy level estimators 327, 337 and 347 report the estimated energy levels 325, 335 and 345 whereat they expect to receive incoming data packets depending on the signalling shared with transmitters that respectively associate with these receivers 302, 303 and 304. The controller 350 that receives in a first step 401 the estimated energy levels 315, 325, 335, 345 from one or more receivers 301-304, shall execute the algorithm illustrated by Fig. 4. In a second step 402, the controller shall determine an individual energy threshold for each of the receivers that reported an estimated energy level. This individual energy threshold may be equal to the estimated energy level reported by the respective receiver, but alternatively this energy threshold may be chosen lower than the reported estimated energy level, for instance a predetermined amount or a predetermined percentage below the reported estimated energy level. In the third step 403, the controller 350 generates signalling 316, 326, 336, 346 to inform the energy threshold units 312, 322, 332, 342 on the individual energy thresholds to be applied by them temporarily. As a result thereof, the first energy threshold unit 312 shall allow the first correlator 313 to start correlating to the expected handshake sequence only when the detected energy level in signal 310 exceeds the first energy threshold 316 determined by controller 350, the second energy threshold unit 322 shall allow the second correlator 323 to start correlating to the expected handshake sequence only when the detected energy level in signal 320 exceeds the second energy threshold 326 determined by controller 350, the third energy threshold unit 332 shall allow the third correlator 333 to start correlating to the expected handshake sequence only when the detected energy level in signal 330 exceeds the third energy threshold 336 determined by controller 350, and the fourth energy threshold unit 342 shall allow the fourth correlator 343 to start correlating to the expected handshake sequence only when the detected energy level in signal 340 exceeds the fourth energy threshold 346 determined by controller 350.

If it is assumed that the same incoming data packet, sent by a transmitter that is for instance associated with the third receiver 303, is simultaneously received by the four receivers 301-304, it is expected that only the third receiver 303 for which the data packet is destined shall receive the incoming data packet with an energy level that exceeds its temporary individual threshold 336. The other receivers 301, 302 and 304 shall receive the incoming data packet with low energy, i.e. with an energy level that does not exceed their respective individual energy thresholds 316, 326 and 346. Consequently, the correlators 313, 323, 343 in these receivers 301, 302, 304 as well as the corresponding data packet processors 314, 324, 344 shall not start training to the incoming data packet and therefore not get blocked on a data packet that is not intended for these receivers. Again, the receivers 301-304 become staged dependent on the sensed energy levels and only the receiver for which the incoming data packet is most likely destined shall start correlating to the handshake sequence in the incoming data packet.

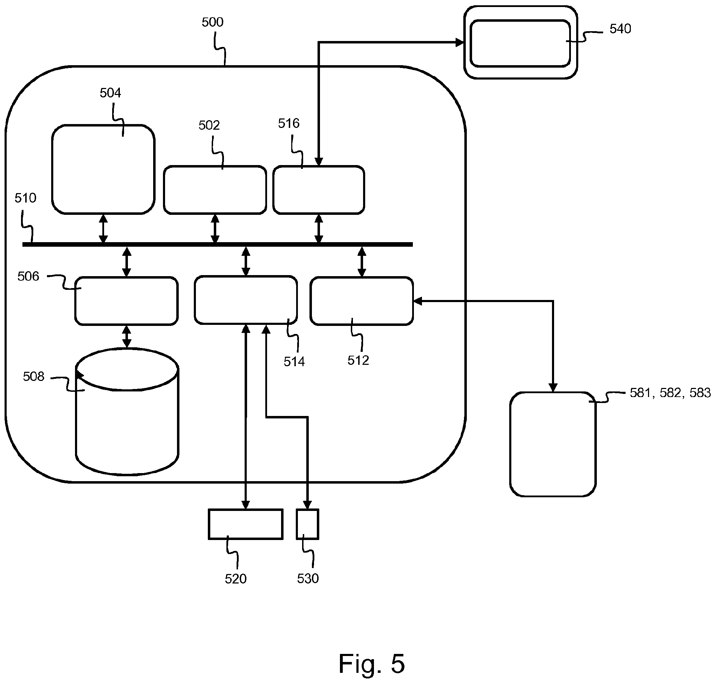

Fig. 5 shows a suitable computing system 500 enabling to implement embodiments of the method for improving blocking effect avoidance in a wireless access node according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used. Computing system 500 could thus correspond to the controller circuitry 150 or 350 in the embodiments illustrated by Fig. 1 or Fig. 3.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A wireless access node (100; 300) comprising:
- a plurality of receivers (101, 102, 103, 104; 301, 302, 303, 304) covering respective sectors, said plurality of receivers (101, 102, 103, 104; 301, 302, 303, 304) being configured to receive incoming data packets (110, 120, 130, 140; 310, 320, 330, 340) on a same radio frequency channel; and
- a controller (150; 350) coupled to said plurality of receivers (101, 102, 103, 104; 301, 302, 303, 304) and configured to determine, upon detection of an incoming data packet by one or several receivers out of said plurality of receivers (101, 102, 103, 104; 301, 302, 303, 304), which receiver is allowed to start correlating to a handshake sequence in said incoming data packet based on detected energy levels by said one or several receivers when detecting said incoming data packet.

2. The wireless access node (100) according to claim 1, wherein:
- each receiver (101, 102, 103, 104) comprises an energy detector (112, 122, 132, 142) configured to listen to said radio frequency channel, to determine an energy level (115, 125, 135, 145) of said incoming data packet as perceived by said receiver, and to report said energy level (115, 125, 135, 145) to said controller (150); and
- said controller (150) is further configured to allow the receiver (102) with highest detected energy level to start correlating to said handshake sequence in said incoming data packet, and to disallow all other receivers (101, 103, 104) to start correlating to said handshake sequence in said incoming data packet.

3. The wireless access node (300) according to claim 1, wherein:
- each receiver (301, 302, 303, 304) of said plurality of receivers comprises an energy level estimator (317, 327, 337, 347) configured to determine an estimated incoming energy level (315, 325, 335, 345) for an incoming data packet from an associated transmitter, and to report said estimated incoming energy level (315, 325, 335, 345) to said controller (350);
- said controller (350) is configured to determine an energy threshold (316, 326, 336, 346) from said estimated incoming energy level (315, 325, 335, 345), and to report said energy threshold (316, 326, 336, 346) to said receiver (301, 302, 303, 304); and
- said receiver (301, 302, 303, 304) is further configured to temporarily apply said energy threshold (316, 326, 336, 346) such that said receiver (301, 302, 303, 304) starts correlating to said handshake sequence in an incoming data packet only if said incoming data packet is detected by said receiver (301, 302, 303, 304) with an energy level above said energy threshold (316, 326, 336, 346).

4. The wireless access node (100; 300) according to one of the preceding claims, wherein said handshake sequence in said incoming data packet is receiver independent.

5. The wireless access node (100; 300) according to one of the preceding claims, wherein said wireless access node is a 3GPP base station.

6. The wireless access node (100; 300) according to one of the preceding claims, wherein said wireless access node is a fixed wireless access point.

7. A method for improving blocking effect avoidance in a wireless access node (100; 300) comprising the steps of:
- detecting an incoming data packet (110, 120, 130, 140; 310, 320, 330, 340) by one or several receivers out of a plurality of receivers (101, 102, 103, 104; 301, 302, 303, 304) covering respective sectors and operating on a same radio frequency channel; and
- determining which receiver is allowed to start correlating to a handshake sequence in said incoming data packet based on detected energy levels by said one or several receivers when detecting said incoming data packet.

8. A computer program product comprising instructions for causing a wireless access node (100; 300) to perform at least the following:
- detecting an incoming data packet (110, 120, 130, 140; 310, 320, 330, 340) by one or several receivers out of a plurality of receivers (101, 102, 103, 104; 301, 302, 303, 304) covering respective sectors and operating on a same radio frequency channel; and
- determining which receiver is allowed to start correlating to a handshake sequence in said incoming data packet based on detected energy levels by said one or several receivers when detecting said incoming data packet.
